(19) Europäisches Patentamt

European Patent Office

Office européen des brevets

(11) Veröffentlichungsnummer: **0 515 349 B1**

## (12) EUROPÄISCHE PATENTSCHRIFT

(45) Veröffentlichungstag der Patentschrift: **13.12.95**

(21) Anmeldenummer: **92890094.3**

(22) Anmeldetag: **16.04.92**

(51) Int. Cl.⁶: **B60C 11/12**

(54) Fahrzeugluftreifen

(30) Priorität: **21.05.91 AT 1029/91**

(43) Veröffentlichungstag der Anmeldung:
**25.11.92 Patentblatt 92/48**

(45) Bekanntmachung des Hinweises auf die
Patenterteilung:
**13.12.95 Patentblatt 95/50**

(84) Benannte Vertragsstaaten:
**AT DE FR GB IT**

(56) Entgegenhaltungen:
**EP-A- 0 131 246**
**EP-A- 0 282 765**
**EP-A- 0 378 090**
**DE-A- 4 107 547**

(73) Patentinhaber: **Semperit Reifen Aktiengesellschaft**
**Wienersdorferstrasse 20-24**
**A-2514 Traiskirchen (AT)**

(72) Erfinder: **Beckmann, Otto, Dr.**
**Kapellengasse 5/1/5/21**
**A-2514 Traiskirchen (AT)**
Erfinder: **Loidl, Helmut, Ing.**

**A-2393 Sparbach 33 (AT)**

(74) Vertreter: **Vinazzer, Edith et al**
**Semperit Reifen Aktiengesellschaft**
**Patentabteilung**
**Wienersdorferstrasse 20-24**
**A-2514 Traiskirchen (AT)**

EP 0 515 349 B1

## Beschreibung

Die Erfindung betrifft einen Reifen mit einer Lauffläche, die Profilelemente wie Blöcke, in Umfangsrichtung verlaufende Rippen oder dergleichen aufweist, die mit Lamellenfeineinschnitten versehen sind, deren Wände eine von der Ebene abweichende Form und zumindest zum Teil einander zugeordnete dreidimensional strukturierte Wandbereiche mit vor- bzw. rückspringenden Kanten bzw. Flächen aufweisen.

Die Erfindung betrifft ferner auch Reifenformlamellen zum Erstellen von Lamellenfeineinschnitten an Reifenlaufflächen.

Es ist bekannt, daß für die Griffeigenschaften eines Reifens die beim normalen Abrollen, beim Bremsen und beim Beschleunigen auftretende Gleitreibung zwischen dem Reifen und dem Untergrund eine wesentliche Rolle spielt. Beim fahrenden Fahrzeug ist zwischen Reifen und Untergrund stets ein Schlupf vorhanden, wobei beim Bremsen und Beschleunigen sowie beim Kurvenfahren ein wesentlich größerer Schlupf auftritt als beim normalen Abrollen. Es ist nun bekannt, daß ein Verringern des Schlupfes sowohl die Griff- und die Hafteigenschaften, als auch die Handlingeigenschaften von Reifen verbessern hilft und es ist daher ein Entwicklungsschwerpunkt, den Schlupf möglichst gering zu halten. Die zu diesem Zweck bisher gesetzten Maßnahmen wurden einerseits auf der Laufflächenmischungsseite und andererseits auf der konstruktiven Seite, also durch entsprechende Gestaltung des Laufflächenprofiles, vorgenommen. Der Beitrag, den die Laufflächenmischung dabei leisten kann, läßt sich kurz so zusammenfassen, daß der Laufflächengummi in der Lage sein soll, beim Gleiten des Reifens über Unebenheiten des Untergrundes zyklische Deformationen zuzulassen, die einen Teil der kinetischen Energie aufzehren. Als konstruktive Maßnahme hat sich bisher bewährt, Lamellenfeineinschnitte in einer Breite von 0,4 bis ca. 0,8 mm in den Profilelementen auszubilden, um zusätzliche Griffkanten zu schaffen, die zu einer Verringerung des Schlupfes beitragen. Die schlupfvermindernde Wirkung von Reifenfeineinschnitten ergibt sich aber nicht bloß durch zusätzliche Griffkanten. Vor allem bei trockener Fahrbahn und starken Reifendeformationen, - Bedingungen, die etwa auch beim Test auf Fahrverhalten ("Handling") gegeben sind - reiben die gegenüberliegenden Wandungen von Reifenfeineinschnitten stark aneinander. Die dabei auftretenden Reibverluste werden der kinetischen Energie des Reifens entzogen und wirken ebenfalls schlupfvermindernd.

Es hat sich jedoch herausgestellt, daß die herkömmliche Lamellierung des Laufflächenprofiles trotzdem eine gewisse Verschlechterung im Handling (Fahrverhalten) bewirkt. Dies liegt daran, daß Reifenfeineinschnitte stets auch eine Labilisierung der Aufstandsgeometrie des Reifens bedeuten. Bei hohen Fahrgeschwindigkeiten wirkt sich das Labilisieren stärker aus als die positiven Effekte der zusätzlichen Griffkanten oder der dissipierten Reibenergie.

Weitere Nachteile, die sich aus der Anwendung von Reifenfeineinschnitten ergeben können, sind das erhöhte Aufnehmen von Steinen, Ausbrüche, die vom Grund der Reifenfeineinschnitte ausgehen, und unregelmäßiger Abrieb.

Um die Nachteile von Feinschnitten zu mildern, ist es Stand der Technik und häufige Praxis, die Tiefe der Feinschnitte zu reduzieren, sei es über die gesamte Breite des Feinschnittes oder auch nur abschnittsweise. Dies bedeutet jedoch, daß während des Reifenlebens solche angehobenen Feineinschnitte früher oder später zur Gänze oder teilweise verlorengehen, woraus zwangsläufig eine mehr oder minder sprunghafte Verschlechterung der Griffeigenschaften der Reifen resultiert. Es ist ferner Stand der Technik anstelle von völlig ebenen Reifenfeineinschnitten, Einschnitte zu verwenden, die in radialer Draufsicht gesehen wellen - oder zickzackförmig sind. Dadurch wird ein Aneinandervorbeigleiten gegenüberliegender Wandhälften der Feineinschnitte in lateraler Richtung wesentlich erschwert. Gegenüber völlig ebenen Reifeneinschnitten ergibt sich solcherart vor allem ein Vorteil im Fahrverhalten.Es sind aber auch Feineinschnitte bekannt, bei denen ein Zickzack oder eine Wellung in die Tiefe der Reifen verlaufen. Solcherart entstehende querorientierte Kanten innerhalb der Feineinschnitte werden z.B. in der DE-OS 1 480 932 dazu genutzt, das Eindringen von Steinen bzw. deren Weiterwandetung zur Gürtelkonstruktion hin zu verhindern.

Weiters werden z.B. in der EP-A1 0 282 765, die einen Reifen gemäß dem Oberbegriff des Anspruches 1 betrifft, spiegelbildliche Paare von Feineinschnitten mit in die Tiefe verlaufendem Zickzack vorgeschlagen. Die solcherart sich ergebende stets entgegengesetzte Neigung paariger Feineinschnitte soll insbesondere den Griff auf nasser, schneeiger oder eisiger Fahrbahn verbessern. Das in die Tiefe verlaufende Zickzack bewirkt ferner, daß zum Grund der Reifenfeineinschnitte hin die Relativbewegungen der aneinandergrenzenden Wandungen zueinander immer mehr abnehmen. Damit wird die Gefahr von Einrissen am Grund der Feineinschnitte zurückgedrängt, und auch die Neigung zu unregelmäßigem Abrieb entschärft.

Alle bisherigen wellen- oder zickzackförmigen bzw. von der Ebene abweichenden Reifenfeineinschnitte schränken die Relativbewegung der aneinandergrenzenden Wandungen zueinander nur in der Richtung des Wellenverlaufes bzw. Zickzackverlaufes ein. In der Richtung senkrecht hiezu sind die Wandungen der Feinschnitte durch durchlaufende gerade Strecken beschreibbar.

Hier setzt nun die Erfindung ein, die sich die Aufgabe gestellt hat, sowohl eine Verbesserung im Handling als auch verbesserte Beständigkeit gegen Einrisse die vom Grund der Feineinschnitte ausgehen, sowie ein Zurückdrängen des unregelmäßigen Abriebs zu erreichen. Ziel der Erfindung ist es ferner, die Reibung der aneinandergrenzenden Wandungen der Feineinschnitte bei Deformationen, die durch Bremsen, Beschleunigen oder Kurvenfahren ausgelost werden, zu erhöhen, um über diese dissipative Komponente den Reifenschlupf zu vermindern.

Gelöst wird die gestellte Aufgabe erfindungsgemäß dadurch, daß die Kanten in den dreidimensional strukturierten Wandbereichen bogenförmig gekrümmt sind und/oder ein Netzwerk bilden und/oder miteinander verzweigt sind.

Damit ist sichergestellt, daß die Wandbereiche der Feineinschnitte in keiner Richtung durchgehende Geraden enthalten. Es ist dabei vorgesehen, daß die Kanten der strukturierten Wandbereiche bogenförmig gekrümmt sind und/oder ein Netzwerk bilden und/oder miteinander verzweigt sind. Durch die Erfindung wird somit auf einfache Weise die Möglichkeit geschaffen, die Relativbewegungen aneinandergrenzender Wandungen von Reifenfeineinschnitten in lateraler und radialer Richtung gering zu halten, und außerdem einen Teil der kinetischen Energie des schlupfenden Reifens wirkungsvoll über Reibung in Wärme umzuwandeln. Die Struktur der Wandbereiche der Lamellenfeineinschnitte läßt deren primären Zweck, nämlich an der Profiloberfläche zusätzliche Griffkanten zu bilden, unberührt.

Erfindungsgemäße Ausgestaltungen von derartigen Reifen sowie Reifenform-Lamellen zur Herstellung von solchen Lamellenfeineinschnitten sind in unterschiedlichen Varianten in den Unteransprüchen enthalten.

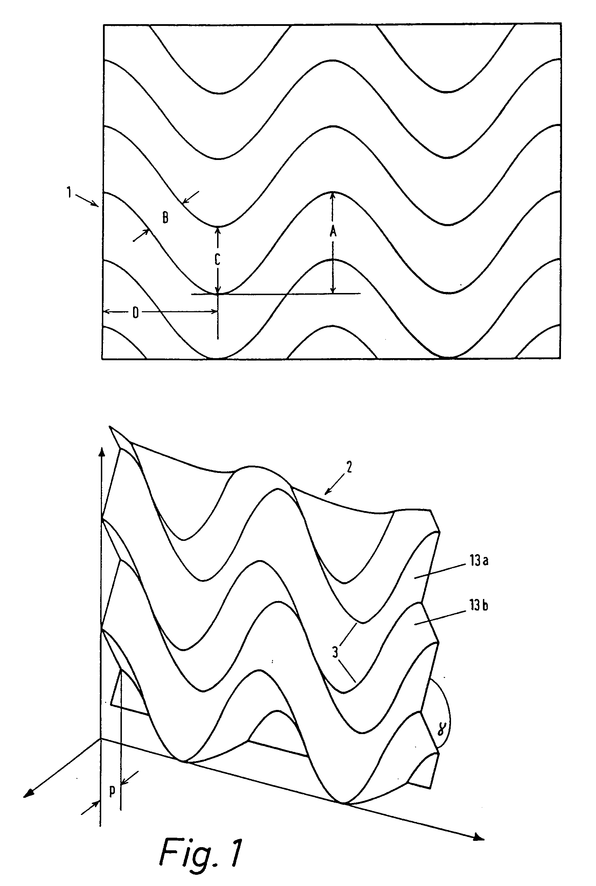

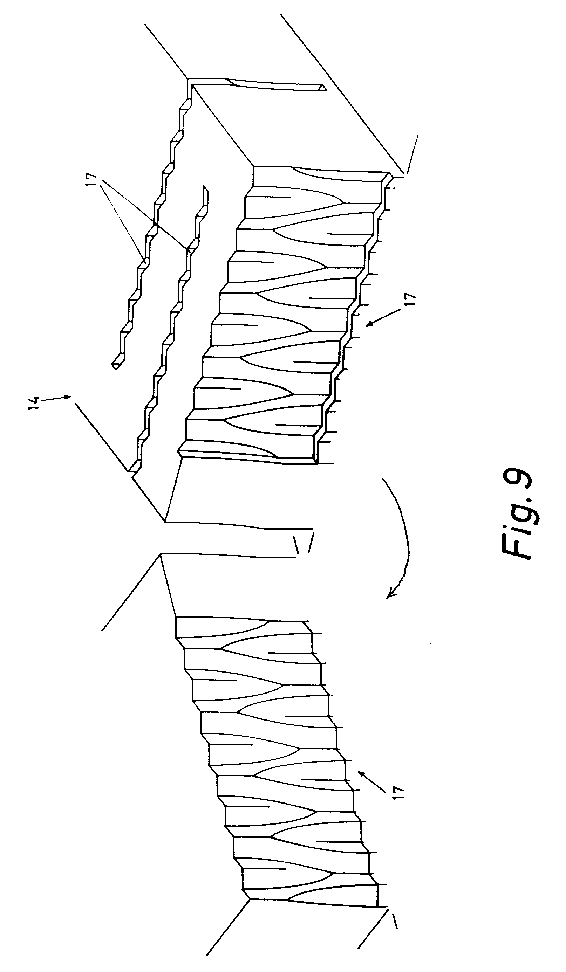

Die Erfindung wird nun anhand der Zeichnung, die mehrere Ausführungsbeispiele darstellt, näher beschrieben. Dabei zeigen die Fig. 1 bis 8 unterschiedliche Ausführungsvarianten von nach der Erfindung gestalteten Reifenformlamellen, jeweils in zwei Darstellungen, wobei die obere Darstellung jeweils dem ebenen Blech 1-1$^{VII}$ mit eingezeichneten Knicklinien entspricht und die untere Darstellung die fertige Lamelle 2-2$^{VII}$ aufzeigt, die zumindest im wesentlichen auch einer Ansicht auf den entsprechend strukturierten Wandbereich eines Feineinschnittes entspricht, und Fig. 9 eine schematische Schrägansicht eines Laufflächenprofilelementes (Blockes), der entlang eines nach der Erfindung gestalteten Feineinschnittes durchtrennt ist, wobei ein Profilelementteil in Pfeilrichtung weggeschwenkt ist.

Sämtliche in den Zeichnungsfiguren dargestellten Ausführungsformen von nach der Erfindung strukturierten Feineinschnitten bzw. Lamellenblechen lassen sich durch Prägung der Lamellenbleche und somit auf sehr einfache Weise herstellen.

In den Zeichnungsfiguren ist eine Darstellung gewählt, bei der der obere Endbereich des jeweiligen Lamellenbleches am fertigen Reifen dem der Straßenoberfläche zugeordneten Endbereich des Feineinschnittes entspricht. Auf die Verankerung der Lamellenbleche in einer Reifenform wird weiters nicht näher eingegangen, da dieser Vorgang in üblicher Weise vor sich gehen kann. Es ist also beispielsweise möglich, die Lamellenbleche in die Reifenform einzugießen, dabei kann die gesamte Lamelle eine Prägungsstruktur nach der vorliegenden Erfindung aufweisen. Nach der Erfindung gestaltete Lamellenbleche können auch in erodierte Formen eingesetzt werden; dabei ist die Kontaktstelle zur Form entsprechend zu gestalten, um ein Einstekken in die Reifenform zuzulassen.

Fig. 1 zeigt nun eine Ausführungsvariante einer Lamelle 2, mit parallel zueinander verlaufenden und der Querrichtung zugeordneten wellen- oder sinusförmigen Knicklinien 3. Dabei sind über die Breite der Lamelle 2 mehrere Wellenberge und Täler abgebildet. Wie aus der oberen Abbildung in Fig. 1 ersichtlich, sind die Wellenzüge um den Betrag C voneinander verschoben. Der daraus resultierende kürzeste gegenseitige Abstand B zwischen benachbarten Wellenzügen wird in einem Bereich zwischen 0,5 bis 3 mm gewählt und beträgt bevorzugt ca. 1,2 mm. Die Amplitude A der Wellenzüge im Blech 1 soll nicht kleiner als C/2 und nicht größer als 3 C sein. Die Länge D entspricht einer Viertelwellenlänge. Beim Formen des Bleches 1 zur Lamelle 2 wird nun um die Knicklinien 3 bis zu einem Knickwinkel $\gamma$ gebogen. Bevorzugte Knickwinkel $\gamma$ liegen in einem Bereich von 150 bis 90°. In der axonometrischen Darstellung 2 ist $\gamma$ = 120° gewählt. Beim Formen verringert sich die Länge D und vergrößert sich die Amplitude A und es entstehen nichtebene Flächen 13a, 13b. Die Prägetiefe p, die aus Fig. 1 ebenfalls ersichtlich ist, wird in einem Bereich von 0,5 bis 3 mm gewählt und beträgt bevorzugt 1,8 mm. Das Lammelenblech selbst wird in einer Stärke von ca. 0,4 bis 0,8 mm gewählt.

Wenn bei der Beschreibung der nun folgenden Ausführungsvarianten nichts Abweichendes erwähnt ist, so treffen die erwähnten Dimensionen für den Abstand benachbarter Knicklinien, die Prägungstiefe und die Stärke des Lamellenbleches auch auf diese Varianten zu.

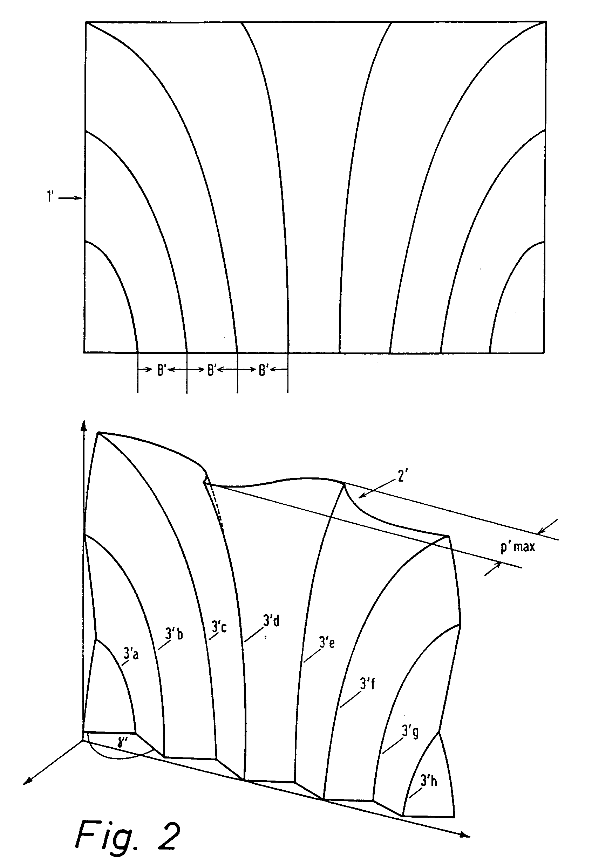

Bei der in Fig. 2 dargestellten Ausführungsform ist eine Schar von gebogenen Knicklinien 3a'-3h' vom Lamellengrund beginnend fächerförmig über die Lamelle 2' geführt. Der Fig. 2 ist zu entnehmen, daß die Prägetiefe p' der Lamelle 2' nicht einheitlich ist. Die maximale Prägetiefe p'max kann hier bis zu etwa 7 mm betragen.

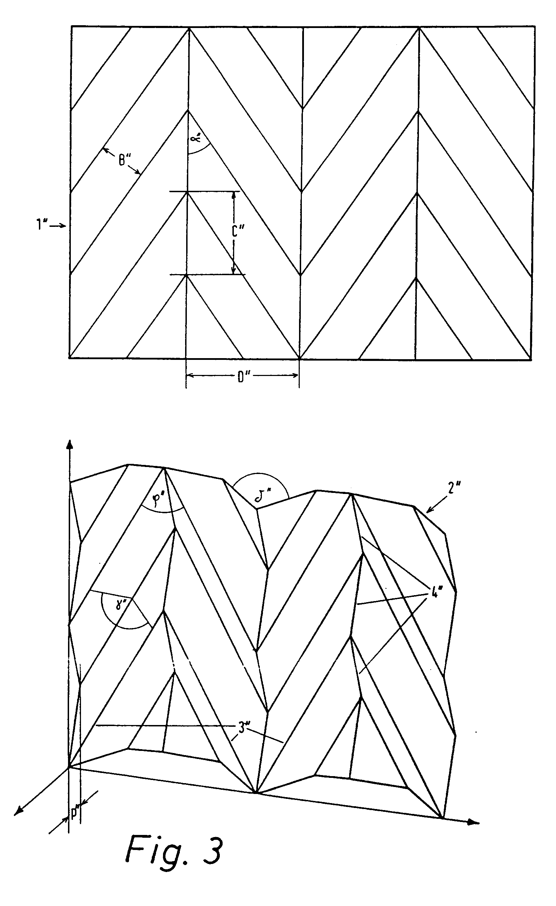

Bei der in Fig. 3 dargestellten Ausführungsvariante sind im Blech 1'' zwei jeweils parallel zueinander verlaufende Scharen von vorgegebenen Knicklinien gezeigt. Die in Querrichtung zickzackförmig verlaufenden Linien werden beim Formen zu zickzackförmigen Knicklinien 3'', die in ihrer Ebene parallel zur Hauptebene der geprägten Lamelle 2'' bleiben. Die im Blech 1'' radial liegenden geraden Linien werden beim Formen auch zu zickzackförmigen Knicklinien 4'', die aber in ihren Ebenen senkrecht zur Hauptebene der Lamelle 2'' zu liegen kommen. Die beiden Scharen von Knicklinien 3'', 4'' ergeben gemeinsam ein Knicklinien-Netzwerk. Die durch die Prägung der Lamelle 2'' geschaffenen einzelnen Prägungsflächen entsprechen Parallelogrammen oder Rhomben. Diese sind, für die gesamte Lamelle 2'' betrachtet, bevorzugt gleich groß. Bei dieser Variante ist es weiters, wie dargestellt, günstig, wenn die der Querrichtung zugeordneten Knicklinien 3'', in der Querrichtung der Lamelle 2'' betrachtet, mit den nächsten und den übernächsten benachbarten Knicklinien 3'' überlappen. Solche ein Überlappen kann gefördert werden durch ein Verkleinern des Parallelogrammwinkels $\alpha''$, aber auch durch ein stärkeres Prägen (kleinere Knickwinkel $\gamma''$),
oder durch ein kleineres Verhältnis B''/D''. Der Nutzen der beschriebenen Überlappung besteht darin, daß beim Abfahren des Reifens keine sprunghafte Veränderung in der Funktion der Lamelle 2'' auftritt. In Fig. 3 sind neben $\alpha''$ und $\gamma''$ weitere Winkel eingezeichnet. Der Winkel $\delta''$ ist der Knickwinkel um die Knicklinie 4'', $\phi'$ ist der Zickzackwinkel der Knicklinie 3''. Es gelten folgende Beziehungen:

$$\sin \tfrac{\phi}{2} = \sin \alpha \cdot \sin \tfrac{\delta}{2}$$
$$\tan \tfrac{\phi}{2} = \tan \alpha \cdot \sin \tfrac{\gamma}{2}$$

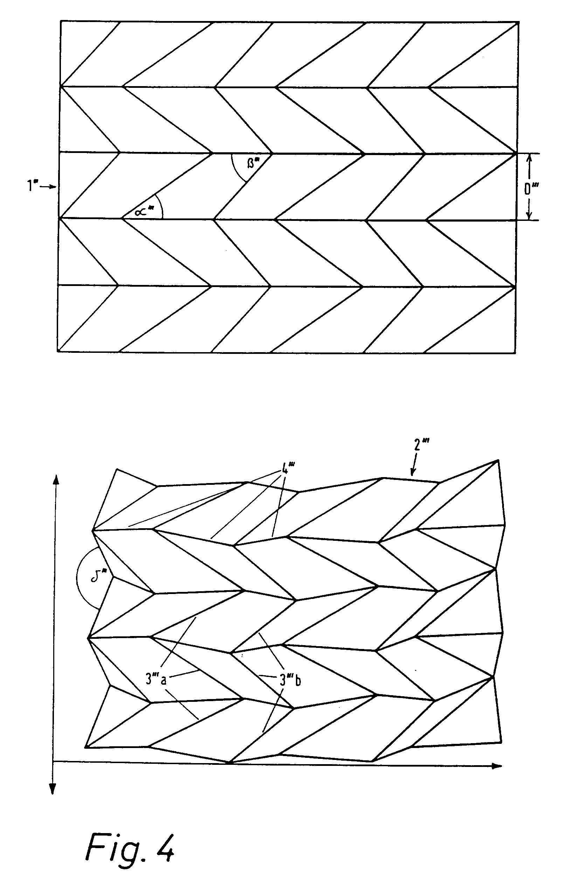

Fig. 4 zeigt eine Lamelle 2''', die sich gegenüber Fig. 3 in zweierlei Hinsicht unterscheidet. Zum einen hat eine Drehung um 90° stattgefunden; die Knicklinien 4''' liegen waagrecht und eine Überlappung der Knicklinien 3''', wie in Fig. 3 dargestellt, ist nun nicht mehr vonnöten. Zum anderen treten nun zwei unterschiedliche Arten von radial orientierten Knicklinien 3a''', 3b''' auf, die sich im Zickzackwinkel unterscheiden. Wie aus Fig. 4 weiters ersichtlich ist, entarten dadurch die Prägeflächen zu Trapezen und die Lamelle 2''' erfährt, in Draufsicht betrachtet, eine Krümmung, die um so stärker ist je größer die Differenz der Winkel $\alpha'''$ und $\beta'''$ ist, und je kleiner der Knickwinkel $\delta'''$ wird. Durch entsprechende Aufeinanderfolge von Knicklinien 3a''' und 3b''' kann also der Lamelle 2''' beispielsweise eine in Draufsicht wellenförmige Gestalt verliehen werden, was bei bestimmten Feineinschnittvarianten im Laufflächenprofil von Vorteil ist. Für die axonometrische Darstellung wurde $\delta''' = 120°$ gewählt. (Es ist hier einfacher mitd $\delta$ anstelle von $\gamma$ zu operieren, weil die Knicklinien 3a''', 3b''' zwei unterschiedliche Winkel $\gamma$ bedingen.

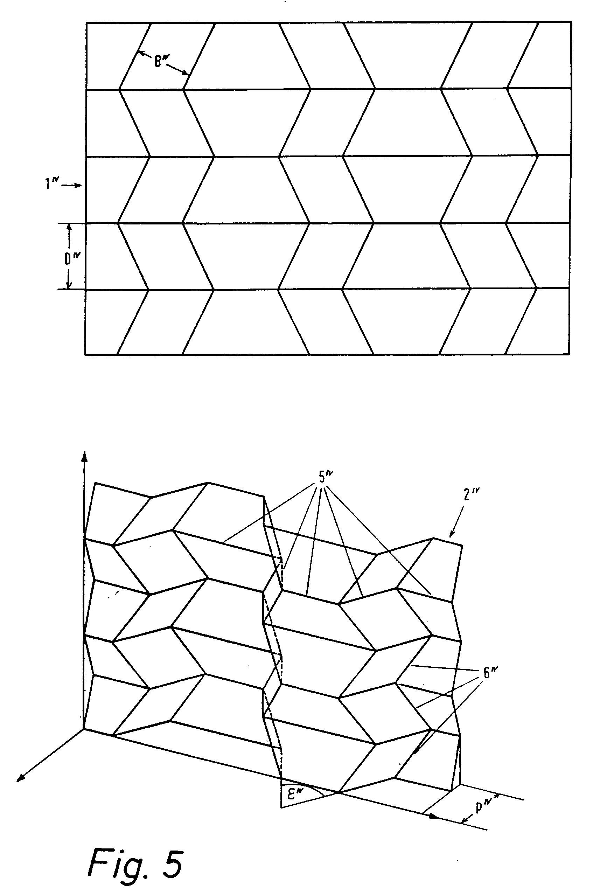

Bei der in Fig. 5 dargestellten Ausführungsvariante ergibt sich eine besondere Prägungsstruktur für die Lamelle $2^{IV}$ dadurch, daß das Netzwerk aus senkrecht zur Ebene der Lamelle $2^{IV}$ stehenden, nicht zickzackförmigen Knicklinien $5^{IV}$ besteht, die mit schräg zur Ebene der Lamelle $2^{IV}$ laufenden zickzackförmigen Knicklinien $6^{IV}$ zu einem Netzwerk von Knicklinien kombiniert sind. Hiebei treten die Knicklinien $6^{IV}$ paarweise parallel zueinander verlaufend auf, und benachbarte Paare verhalten sich zueinander wie Bild und Spiegelbild. Die Prägestruktur beinhaltet Flächen in Form von gleichseitigen Trapezen und Parallelogrammen bzw. Rhomben. Die Lamelle $2^{IV}$ zeigt eine ausgeprägte "Wellung" in Querrichtung, die sich auch in einer relativ starken Prägetiefe $p^{IV}$ auswirkt, die bis zu ca. 6 mm betragen kann. Demgegenüber ist die Strukturierung in radialer Richtung relativ schmal. Der von den Knicklinien $5^{IV}$ eingeschlossene Knickwinkel $\epsilon^{IV}$ wurde für die axonometrische Darstellung $\epsilon^{IV} = 60°$ gewählt.

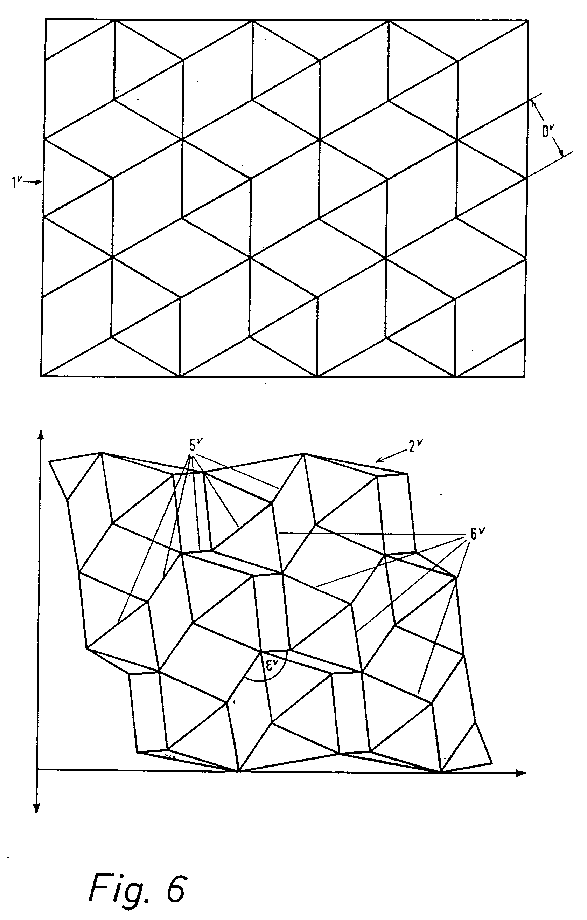

Fig. 6 zeigt eine Variante zu Fig. 5. Hier ist die Spiegelung der zickzackförmigen Knicklinien $6^{V}$ so geführt, daß sich diese berühren und die Prägestruktur nunmehr aus Rhomben und Dreiecken besteht. Zusätzlich wurde das Knicklinien-Netzwerk gedreht, so daß die Knicklinien $5^{V}$ nicht mehr orthogonal liegen. Eine Neigung der Ebene der Knicklinien $5^{V}$ zur Querrichtung der Lamelle $2^{V}$ von 20 bis 70° wird bevorzugt. Während in Fig. 4 die Lamelle $2^{IV}$ beim Abfahren des Laufstreifens ihre Neigung zur Straße sprunghaft ändert, wird dies durch das beschriebene Schrägstellen der Lamelle $2^{V}$ vermieden. Vorteilhaft kann sich solch ein Schrägstellen, vor allem bei Anwendung im Schulterbereich des Reifens, auch auf das Fahrverhalten auswirken $\epsilon^{V} = 60°$.

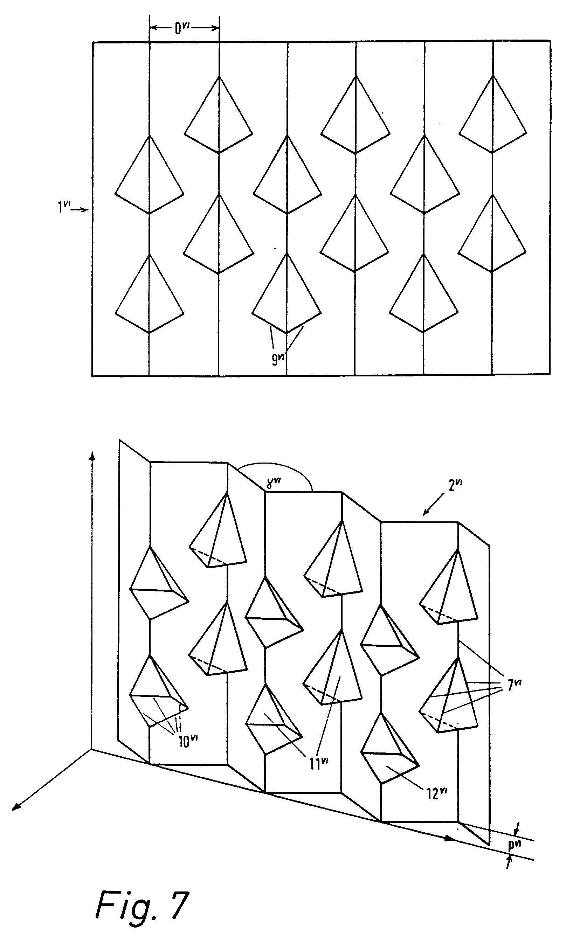

Bei der in Fig. 7 dargestellten Ausführungsvariante einer Lamelle $2^{VI}$ ist diese, in Draufsicht betrachtet, mit einer einfachen zickzack- oder wellenförmigen Struktur versehen, sodaß in Richtung der Feineinschnittiefe verlaufende Kanten bzw. Eckbereiche vorliegen. Entlang dieser Eckbereiche bzw. Kanten sind durch Ausstanzen gebildete einspringende Nasen $11^{VI}$ vorgesehen. Jede Nase $11^{VI}$ bedingt ein Loch $12^{VI}$, in welches eine verzweigte Knicklinie $7^{VI}$ bzw. eine gebogene Knicklinie einmündet. Während des Formens des Reifens bzw. während des Heizvorganges desselben tritt die Laufflächenkautschukmischung durch die Löcher $12^{VI}$. Da die Nasen in radialer Richtung orientiert sind, wird beim Entformungsvorgang der Laufflächengummi im Bereich der Löcher 12$^{VI}$ durchtrennt und die dadurch entstehende Wandstruktur in den Lamellenfeineinschnitten gewährleistet den nach der Erfindung zu erzielenden Effekt. Die durch das Stanzen der Nasen 11$^{IV}$ entstehenden Löcher 12$^{IV}$ sollen dabei so dimensioniert sein, daß wiederum eine Prägetiefe von bis zu 2 mm, insbesondere von ca. 1 mm vorliegt.

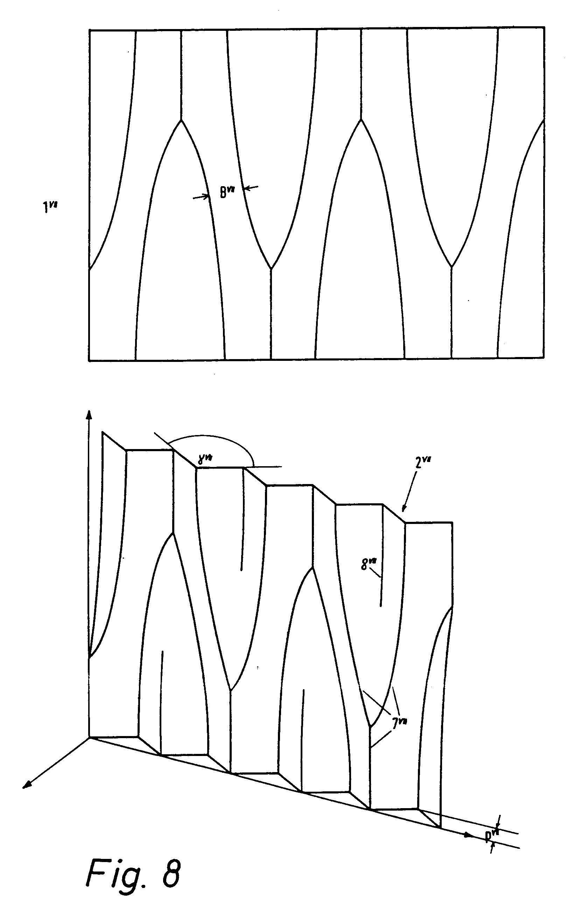

Fig. 8 bringt schließlich ein Beispiel einer Lamelle 2$^{VII}$ bei der verzweigte Knicklinien 7$^{VII}$ Anwendung finden, die aus geraden und bogenförmigen Elementen bestehen. Die verzweigten Knicklinien 7$^{VII}$ sind radial angeordnet und benachbarte verzweigte Knicklinien 7'' sind gegensinnig orientiert. In Fig. 8 treten auch isolierte Knicklinien 8$^{VII}$ auf, die aber durch entsprechende Rundung dieser Partie ebensogut vermieden werden können.

Bei allen beschriebenen und dargestellten Ausführungsvarianten können die Prägungsdimensionen so aufeinander abgestimmt werden, daß bei der Aufprägung bzw. Einprägung der Struktur keine bzw. kaum Materialverspannungen im Lamellenblech auftreten. Insbesonders ist es bei den in Fig. 1 bis 8 dargestellten Varianten möglich, die beschriebene und dargestellte Prägungsstruktur aus der Ebene durch Faltung entlang der Knicklinien entstehen zu lassen. Selbstverständlich ist es auch möglich, Verspannungen im Lamellenblech, die jedoch klein gehalten werden sollten, in Kauf zu nehmen, und das Netzwerk von Knicklinien durch Strukturen entstehen zu lassen, die eben nicht aus der Ebene faltbar sind.

In Fig. 9 ist ein Profilblock 14 eines Laufflächenprofiles eines Fahrzeugreifens dargestellt, welcher Lamellenfeineinschnitte 17 aufweist, die mit Reifenformlamellen, die gemäß Fig. 8, gestaltet waren, geformt sind. Wie allgemein bekannt ist, kann sich ein Bereich eines Laufflächenprofiles aus derartigen Blöcken 14 zusammensetzen, die beispielsweise durch Querrillen und in Umfangsrichtung verlaufende Nuten begrenzt sind. Die im Block 14 vorgesehenen Lamellenfeineinschnitte 17 können nun in Querrichtung verlaufen und in Umfangsnuten einmünden. Insbesondere beim Bremsen und Beschleunigen werden die Feineinschnittwände durch die Blockdeformationen, die im Latschbereich bzw. knapp vor dem Eintreten in die Aufstandfläche bzw. knapp nach dem Verlassen derselben auftreten, gegeneinander gepreßt und können auf Grund ihrer Struktur nur erschwert voneinander abgleiten, sodaß über Reibung Energie in Wärme umgewandelt und der Schlupf verringert wird. Es wird auch darauf verwiesen, daß die geschilderten und dargestellten Ausführungsvarianten abgewandelt und/oder miteinander kombiniert werden können.

## Patentansprüche

1. Reifen mit einer Lauffläche, die Profilelemente wie Blöcke, in Umfangsrichtung verlaufende Rippen oder dergleichen aufweist, die mit Lamellenfeineinschnitten versehen sind, deren Wände eine von der Ebene abweichende Form und zumindest zum Teil einander zugeordnete dreidimensional strukturierte Wandbereiche mit vor- bzw. rückspringenden Kanten bzw. Flächen aufweisen, dadurch gekennzeichnet, daß die Kanten in den dreidimensional strukturierten Wandbereichen bogenförmig gekrümmt sind und/oder ein Netzwerk bilden und/oder miteinander verzweigt sind.

2. Reifen nach Anspruch 1, dadurch gekennzeichnet, daß die dreidimensional strukturierten Wandbereiche eine eingeprägte Struktur aufweisen, die sich aus bogenförmig gekrümmten Knicklinien (3, 3') zusammensetzt.

3. Reifen nach Anspruch 1, dadurch gekennzeichnet, daß die dreidimensional strukturierten Wandbereiche eine eingeprägte Struktur aufweisen, die aus einem Netzwerk von Knicklinien (3'', 4'', 3a''', 3b''', 4''', 5$^{IV}$, 6$^{IV}$, 5$^{V}$, 6$^{V}$) besteht.

4. Reifen nach Anspruch 1, dadurch gekennzeichnet, daß die dreidimensional strukturierten Wandbereiche eine eingeprägte Struktur von verzweigten Knicklinien (7$^{VI}$, 7$^{VII}$ aufweisen.

5. Reifen nach Anspruch 2, dadurch gekennzeichnet, daß die bogenförmig gekrümmten Knicklinien (3) als der Querrichtung der Wandbreite zugeordnete, wellen- oder sinusförmige Knicklinien ausgebildet sind.

6. Reifen nach Anspruch 2, dadurch gekennzeichnet, daß die bogenförmig gekrümmten Knicklinien (3') vom Grund der Feineinschnitte beginnend fächerförmig auseinanderlaufen.

7. Reifen nach Anspruch 3, dadurch gekennzeichnet, daß das Netzwerk parallel zu einer Hüll-Ebene der strukturierten Wandbereiche liegende und zueinander parallele zickzackförmige Knicklinien (3'') aufweist, die mit weiteren zickzackförmigen Knicklinien (4'') kombiniert sind, die in im wesentlichen senkrecht auf die Hüll-Ebene gelegenen Ebenen liegen.

8. Reifen nach Anspruch 7, dadurch gekennzeichnet, daß die der Querrichtung zugeordneten Knicklinien (3''), in Querrichtung des Feineinschnittes betrachtet, jeweils zumindest mit den nächsten benachbarten Knicklinien (3'') überlappen.

9. Reifen nach Anspruch 7, dadurch gekennzeichnet, daß zwei unterschiedliche Gruppen von radial orientierten Knicklinien (3a''', 3b''') vorliegen, die sich im Zickzackwinkel unterscheiden.

10. Reifen nach Anspruch 3, dadurch gekennzeichnet, daß das Netzwerk senkrecht zu einer Hüllebene der strukturierten Wandbereiche stehende, nicht zickzackförmige Knicklinien ($5^{IV}$) aufweist, die mit schräg zur Hüllebene verlaufenden, zickzackförmigen Knicklinien ($6^{IV}$) kombiniert sind, wobei die zickzackförmigen Knicklinien ($6^{IV}$) paarweise parallel zueinander verlaufen und benachbarte Paare zueinander spiegelbildlich sind.

11. Reifen nach Anspruch 10, dadurch gekennzeichnet, daß die zickzackförmig gestalteten Knicklinien ($6^{V}$) derart miteinander kombiniert sind, daß Berührungspunkte bei der Spiegelung entstehen.

12. Reifen nach Anspruch 11, dadurch gekennzeichnet, daß die Knicklinien ($5^{V}$) in einer nichtorthogonalen Lage im strukturierten Wandbereich aufscheinen, wobei eine Neigung der Ebenen der Knicklinien ($5^{V}$) zur Querrichtung des Wandbereiches von 20 bis 70° bevorzugt ist.

13. Reifen nach Anspruch 4, dadurch gekennzeichnet, daß der Feineinschnitt, in radialer Draufsicht betrachtet, primär zickzack- oder wellenförmig ist, wobei die parallel zueinander verlaufenden Kanten bzw. Eckbereiche der Wellen der Radialrichtung zugeordnet sind, und wobei entlang der Kanten bzw. Eckbereiche ein- bzw. vorspringende Nasen ($II^{VI}$) vorgesehen sind, wobei jede Nase ($II^{VI}$) einen Bereich bedingt, in den eine verzweigte Knicklinie ($7^{VI}$) bzw. eine gebogene Knicklinie einmündet.

14. Reifen nach Anspruch 4, dadurch gekennzeichnet, daß verzweigte Knicklinien ($7^{VII}$) im wesentlichen in radialer Richtung durch die strukturierten Wandbereiche laufen, wobei benachbarte verzweigte Knicklinien ($7^{VII}$) entgegengesetzt orientiert sind.

15. Reifen nach einem der Ansprüche 1 bis 14, dadurch gekennzeichnet, daß benachbarte Knicklinien einen Minimalabstand (B) voneinander aufweisen, der mindestens 0,5 und höchstens 5 mm beträgt.

16. Reifen nach einem der Ansprüche 1 bis 15, dadurch gekennzeichnet, daß die Hüllebenen der strukturierten Wandbereiche einen Abstand zwischen 0,5 und 7 mm, insbesondere 1,8 mm aufweisen.

17. Reifen nach einem der Ansprüche 1 bis 15, dadurch gekennzeichnet, daß die Feineinschnitte eine Dicke im Bereich von 0,4 bis 0,8 mm aufweisen.

18. Reifenformlamelle zum Herstellen von Lamellenfeineinschnitten an Laufflächen von Reifen nach einem der Ansprüche 1 bis 17, dadurch gekennzeichnet, daß das Lamellenblech eine eingeprägte dreidimensionale Struktur aufweist, mit Knicklinien, die bogenförmig gekrümmt sind und/oder ein Netzwerk bilden und/oder miteinander verzweigt sind.

**Claims**

1. Tyre, having a tread surface which includes profile elements, such as blocks, circumferentially extending ribs or the like, which are provided with fine laminar incisions, the walls of which have a configuration which deviates from the plane and three-dimensionally structured wall regions, at least some of which are associated with one another, said wall regions having protruding or arching-back edges or faces, characterised in that the edges in the three-dimensionally structured wall regions are curved in an arcuate manner and/or form a network and/or are branched with one another.

2. Tyre according to claim 1, characterised in that the three-dimensionally structured wall regions have an indented structure which comprises arcuately curved broken lines (3, 3').

3. Tyre according to claim 1, characterised in that the three-dimensionally structured wall regions have an indented structure which comprises a network of broken lines (3'', 4'', 3a''', 3b''', 4''', $5^{IV}$, $6^{IV}$, $5^{V}$, $6^{V}$).

4. Tyre according to claim 1, characterised in that the three-dimensionally structured wall regions have an indented structure of branched broken lines ($7^{VI}$, $7^{VII}$).

5. Tyre according to claim 2, characterised in that the arcuately curved broken lines (3) are configured as undulatory or sinusoidal broken lines which are associated with the transverse direction of the wall width.

6. Tyre according to claim 2, characterised in that the arcuately curved broken lines (3') diverge in a fan-shaped manner starting from the base of the fine incisions.

7. Tyre according to claim 3, characterised in that the network has zigzag-shaped broken lines (3''), which lie parallel to an enveloping plane of the structured wall regions and extend parallel to one another, said lines being combined with additional zigzag-shaped broken lines (4''), which lie in planes substantially extending perpendicular to the enveloping plane.

8. Tyre according to claim 7, characterised in that the broken lines (3''), which are associated with the transverse direction, overlap with at least the next adjacent broken lines (3'') when viewed with respect to the transverse direction of the fine incision.

9. Tyre according to claim 7, characterised in that two different groups of radially orientated broken lines (3a''', 3b''') are provided, which differ from one another in respect of the zigzag angle.

10. Tyre according to claim 3, characterised in that the network has non-zigzag-shaped broken lines (5$^{IV}$),which extend perpendicular to an enveloping plane of the structured wall regions and are combined with zigzag-shaped broken lines (6$^{IV}$) which extend inclinedly relative to the enveloping plane, the zigzag-shaped broken lines (6$^{IV}$) extending parallel to one another in pairs, and adjacent pairs being mirror-inverted relative to one another.

11. Tyre according to claim 10, characterised in that the zigzag-shaped broken lines (6$^{V}$) are combined with one another in such a manner that contact points are produced in the reflection.

12. Tyre according to claim 11, characterised in that the broken lines (5$^{V}$) appear in a non-orthogonal position in the structured wall region, whereby an inclination of the planes of the broken lines (5$^{V}$) relative to the transverse direction of the wall region of between 20° and 70° is preferred.

13. Tyre according to claim 4, characterised in that the fine incision, when viewed radially from above, is primarily zigzag-shaped or undulatory, whereby the edges or corner regions of the undulations extending parallel to one another are associated with the radial direction, and whereby tapering and/or protruding projection members (11$^{VI}$) are provided along the edges or corner regions, whereby each projection member (11$^{VI}$) requires a region in which a branched broken line (7$^{VI}$) or a curved broken line terminates.

14. Tyre according to claim 4, characterised in that branched broken lines (7$^{VII}$) extend substantially in a radial direction through the structured wall regions, whereby adjacent branched broken lines (7$^{VII}$) are orientated in the direction.

15. Tyre according to one of claims 1 to 14, characterised in that adjacent broken lines have a minimum spacing (B) from one another, which spacing is at least 0.5 mm and at most 5 mm.

16. Tyre according to one of claims 1 to 15, characterised in that the enveloping planes of the structured wall regions have a spacing of between 0.5 mm and 7 mm, more especially 1.8 mm.

17. Tyre according to one of claims 1 to 15, characterised in that the fine incisions have a thickness in the range of between 0.4 mm and 0.8 mm.

18. Tyre mould lamella for producing fine laminar incisions on tread surfaces of tyres according to one of claims 1 to 17, characterised in that the lamella plate has an indented three-dimensional structure, with broken lines which are curved in an arcuate manner and/or form a network and/or are branched with one another.

**Revendications**

1. Bandage pneumatique comportant une bande de roulement munie d'éléments de profilage tels que des blocs, des nervures s'étendant dans la direction périphérique, ou des configurations similaires qui sont pourvues de minces entailles de lamelisation, dont les parois présentent une forme s'écartant du plan et des régions de paroi à structure tridimensionnelle, coordonnées les unes aux autres au moins en partie, et pourvues de bords ou surfaces présentant, respectivement, une saillie ou un retrait, caractérisé par le fait que les bords sont arqués dans les régions de paroi à structure tridimensionnelle et/ou forment un éseau et/ou sont mutuellement ramifiés.

**2.** Bandage pneumatique selon la revendication 1, caractérisé par le fait que les régions de paroi à structure tridimensionnelle présentent une structure empreinte constituée par des lignes d'inflexion (3, 3') arquées.

**3.** Bandage pneumatique selon la revendication 1, caractérisé par le fait que les régions de paroi à structure tridimensionnelle présentent une structure empreinte constituée d'un réseau de lignes d'inflexion (3'', 4'', 3a''', 3b''', 4''', $5^{IV}$, $6^{IV}$, $5^{V}$, $6^{V}$).

**4.** Bandage pneumatique selon la revendication 1, caractérisé par le fait que les régions de paroi à structure tridimensionnelle présentent une structure empreinte de lignes d'inflexion ramifiées ($7^{VI}$, $7^{VII}$).

**5.** Bandage pneumatique selon la revendication 2, caractérisé par le fait que les lignes d'inflexion (3) arquées sont réalisées sous la forme de lignes d'inflexion ondulées ou sinusoïdales, affectées à la direction transversale de la largeur des parois.

**6.** Bandage pneumatique selon la revendication 2, caractérisé par le fait que les lignes d'inflexion (3') arquées divergent les unes des autres en éventail, en commençant par le fond des entailles minces.

**7.** Bandage pneumatique selon la revendication 3, caractérisé par le fait que le réseau présente des lignes d'inflexion (3'') en zigzag qui sont parallèles les unes aux autres, sont situées parallèlement à un plan enveloppant des régions de paroi structurées, et sont combinées à d'autres lignes d'inflexion (4'') en zigzag, situées dans des plans pour l'essentiel perpendiculaires au plan enveloppant.

**8.** Bandage pneumatique selon la revendication 7, caractérisé par le fait que les lignes d'inflexion (3'') affectées à la direction transversale se chevauchent à chaque fois, observées dans la direction transversale de l'entaille mince, au moins avec les lignes d'inflexion voisines successives (3'').

**9.** Bandage pneumatique selon la revendication 7, caractérisé par la présence de deux groupes différents de lignes d'inflexion (3a''', 3b''') orientées radialement, dont l'angle de zigzag diffère.

**10.** Bandage pneumatique selon la revendication 3, caractérisé par le fait que le réseau présente des lignes d'inflexion ($5^{IV}$) non configurées en zigzag, perpendiculaires à un plan enveloppant des régions de paroi structurées, et combinées à des lignes d'inflexion ($6^{IV}$) en zigzag s'étendant à l'oblique par rapport au plan enveloppant, les lignes d'inflexion ($6^{IV}$) en zigzag s'étendant parallèlement les unes aux autres par paires, et des paires voisines étant mutuellement spéculaires.

**11.** Bandage pneumatique selon la revendication 10, caractérisé par le fait que les lignes d'inflexion ($6^{V}$) configurées en zigzag sont mutuellement combinées de manière à donner naissance à des points de contact lors de l'agencement spéculaire.

**12.** Bandage pneumatique selon la revendication 11, caractérisé par le fait que les lignes d'inflexion ($5^{V}$) se présentent dans une position non orthogonale dans la région de paroi structurée, une inclinaison des plans des lignes d'inflexion ($5^{V}$), par rapport à la direction transversale de la région de paroi, étant préférentiellement de 20 à 70°.

**13.** Bandage pneumatique selon la revendication 4, caractérisé par le fait que l'entaille mince est majoritairement de configuration en zigzag ou ondulée observée en plan dans la direction radiale, les bords ou les zones d'angle des ondulations, s'étendant parallèlement les un(e)-s aux autres, étant affecté(e)s à la direction radiale et des mentonnets ($11^{VI}$) respectivement rentrants ou sortants étant prévus le long des bords ou des zones d'angle, chaque mentonnet ($11^{VI}$) déterminant une zone dans laquelle débouche, respectivement, une ligne d'inflexion ramifiée ($7^{VI}$) ou une ligne d'inflexion cintrée.

**14.** Bandage pneumatique selon la revendication 4, caractérisé par le fait que des lignes d'inflexion ramifiées ($7^{VII}$) s'étendent, pour l'essentiel, dans la direction radiale par les régions de paroi structurées, des lignes d'inflexion ramifiées ($7^{VII}$) voisines étant orientées en sens inverse.

**15.** Bandage pneumatique selon l'une des revendications 1 à 14, caractérisé par le fait que des lignes d'inflexion voisines sont mutuellement espacées d'une distance minimale (B) mesurant au moins 0,5 et au plus 5 mm.

**16.** Bandage pneumatique selon l'une des revendications 1 à 15, caractérisé par le fait que les plans enveloppants des régions de paroi structurées présentent une distance comprise entre 0,5 et 7 mm, mesurant notamment 1,8 mm.

17. Bandage pneumatique selon l'une des revendications 1 à 15, caractérisé par le fait que les entailles minces présentent une épaisseur comprise entre 0,4 et 0,8 mm.

18. Lamelle de moulage de pneumatiques pour produire de minces entailles de lamellisation sur des bandes de roulement de bandages pneumatiques selon l'une des revendications 1 à 17, caractérisée par le fait que la tôle de la lamelle présente une structure tridimensionnelle empreinte, munie de lignes d'inflexion qui sont arquées et/ou forment un réseau et/ou sont mutuellement ramifiées.

Fig. 1

*Fig. 2*

*Fig. 3*

Fig. 4

**Fig. 5**

Fig. 6

Fig. 7

Fig. 8

*Fig.9*